Europäisches Patentamt

European Patent Office

Office européen des brevets

(11) Publication number: **0 386 345 A1**

# EUROPEAN PATENT APPLICATION

(21) Application number: **89200570.3**

(22) Date of filing: **07.03.89**

(51) Int. Cl.5: **C05G 3/04, C09K 17/00, G01N 33/24**

(43) Date of publication of application:
**12.09.90 Bulletin 90/37**

(84) Designated Contracting States:
**AT BE CH DE ES FR GB GR IT LI LU NL SE**

(71) Applicant: **TERRACOTTEM, Naamloze Vennootschap**
**Fabriekstraat 2**
**B-9470 Denderleeuw(BE)**

(72) Inventor: **Van Cotthem, Willem**
**Poolse-Winglaan 9**
**B-9820 Gent(BE)**

(74) Representative: **Callewaert, Jean et al**
**Bureau Gevers S.A. rue de Livourne 7 bte 1**
**B-1050 Bruxelles(BE)**

(54) **A method for forming a mixture of soil conditioning means.**

(57) A method for forming a mixture of soil conditioning means for improving plant growth, said mixture comprising at least a water absorbing polymer, and wherein a first indicator indicating the water and/or air capacity of the soil part to be conditioned is determined. The method further comprises the determination of the amount of organic material in the said soil even as the determination of a minimum amount of polymer to be introduced into said mixture and the determination of a respective part of biologically decomposable polymer within said amount of polymers. Further parameters can also be taken into account for forming the mixture.

Fig.11.

## A method for forming a mixture of soil conditioning means

The present invention relates to a method for forming a mixture of soil conditioning means provided for improving plants growth, said mixture comprising at least a water absorbing polymer, and wherein a first indicator indicating the water and/or air capacity of the soil part to be conditioned is determined.

Such a method is known from the dutch patent application n° 77 09 289. In the known method a fertilizer is mixed with water absorbing polymers. Due to the water retaining capacity of the used polymer and its capability of slowly releasing the stored water which is mixed with a fertilizer it is possible to supply over a longer period of time water and fertilizer to a plant which is planted into a soil provided with said soil conditioning mixture. Such conditioning means are applicable as well to domestical plants as for the purpose of horticulture, agriculture or forestry. For example they can be used for improving the soil in regions of the world where the soil is poor or dry. In the known method the used polymers are either biologically decomposable ones such as for example polymers on the basis of starch or cellulosis or biologically non-decomposable ones such as for example a polymer on an acryl acid base or an acryl amide base.

A drawback of the known method is that the quality of the soil which has to be conditioned is not sufficiently taken into account when forming the soil conditioning mixture. There are different parameters which are essential for determining the quality of the soil to be improved, and it is important to know what are the deficiencies of the soil in order to know what should be supplied to the soil in order to improve its quality and thus to improve the growth of plants in that soil. It has been experimentally established that by simply introducing polymers with a fertilizer which is not appro priate for the soil to be conditioned a satisfactory result cannot be obtained. Without an appropriate conditioning the biological equilibrium cannot be (re-)established, thus resulting in an unsufficient improvement of the plant growth.

It is an object of the present invention to realize a method for forming a soil conditioning mixture wherein the qualities of the soil are taken into account.

In order to realize that object a method according to the present invention is characterized in that said method comprises the following steps :
- determining a second indicator indicating the amount of organic material per unit of volume present in said part of said soil;
- determining upon said first indicator and taking into account the absorption capacity of the polymers to be used, a minimum amount of polymer per unit of volume of said part of said soil to be introduced into said mixture;
- determining upon said second indicator a respective part of biologically decomposable polymers within said amount of polymers;
- supplying per unit of volume of the part of the soil to be conditioned at least said amount of polymers which comprises at least said respective part of biologically decomposable polymers.

The second indicator indicates the amount of organic material in the soil to be conditioned. That second indicator thus indicates how rich or how poor that soil is and thus gives a measure on how much organic material should be added to that soil in order to improve its quality and allow normal plant growth. Since there are biologically decomposable and non-decomposable polymers the second indicator provides a good reference in order to determine how much of the total amount of polymers should be of the biologically decomposable type. The polymer characteristic of retaining and slowly releasing water provides a buffering and supply of water to the soil and to the plants. Since the biologically decomposable polymer is an organic substance, it will decompose when introduced into the soil, thus forming a nutrition source for organisms like bacteria or fungi, which will be able to develop and to multiply themselves. The bacterial and fungal activity will on its turn start or improve a series of biological cycles since these bacterial and fungal activities will start or improve nitrification and other processes producing elements which are essential for the growth of the plant. There has been observed that in the soil biologically decomposable polymers gradually decompose, and therefor facilitate the nitrification and other processes even in soils where there was only a minimum of biological activity. The gradual decomposition of the biologically decomposable polymers is carried out by organisms like bacteria and fungi.

The gist of the present invention is the insight that by mixing biologically decomposable and biologically non-decomposable polymers, and by accurately determining a respective part of biologically decomposable polymers, there is obtained a soil conditioning mixture which on the one hand is particularly adapted to the soil to be conditioned and on the other hand provides as well a nutrition source as a water supply to the plant.

The surprising effect of introducing biologically decomposable polymers is that normally those polymers are considered as carbon supply sources which would thus tend to influence the equilibrium in the soil and which therefor would normally not be used as a fertilizer. However due to their gradual decomposition they form such an appropriate nutrition source for bacteria and fungi that the nitrification process caused by some bacteria attracted by the polymers will quickly reestablish the C/N ratio at an appropriate level.

Advantageously said amount of polymer is further determined by taking into account said second indicator. The biologically decomposable polymers can have a different water absorption capacity than that of the biologically non-decomposable ones. By taking into account the second indicator said minimum amount can be determined more accurately.

A first preferred embodiment of a method according to the present invention is characterized in that said method comprises the further steps of :
- determining a third indicator indicating a minimum period of time during which said polymer has to remain operational;
- selecting polymers which remain operational during a period of time which is at least equal to the period of time indicated by said indicator.

For certain plants or soils it is only necessary that the soil conditioning means are operational during a limited period of time, for example during a dry period. The determination of the minimum period of time during which said soil conditioning means have to remain operational enables to provide the right choice among the available polymers.

Since polymers are divided into classes according to the dimension of the particles forming the polymers it is preferabel that the granulometry of the soil to be conditioned is determined and that to each class of polymers there is assigned a particular granulomertric range and that for the polymers to be supplied there are chosen polymers belonging to a class corresponding to the determined granulometry. The application of such a method allows a particular choice of the polymers to be used and which are particularly adapted to the type of soil which has to be conditioned.

A second preferred embodiment of a method according to the present invention is characterized in that a first amount of at least one of the chemical macro- and/or micro-elements per unit of volume of the part of the soil to be conditioned is determined and that for each of said determined first amount there is verified whether said first amount is less than a predetermined nominal amount and that if said first amount for each of the considered elements is less than said predetermined nominal amount for the considered elements, there is introduced into said mixture a second amount of fertilizer comprising at least the considered chemical element in order to compensate for a deficiency in said considered chemical element. Macro- and/or micro elements form the basis of many fertilizers.

By introducing a well determined amount of each one of the considered elements a compensation for a deficiency of those chemical elements and thus an improvement of the soil is obtained.

Preferably at least one fertilizer is introduced into said conditioning mixture the particles of said fertilizer being embedded into a porous layer. This enables a slow release of the fertilizer and thus a conditioning of the soil spread over a longer period of time. Such a fertilizer is called a slow release fertilizer.

In a third preferred embodiment of a method according to the invention at least one organic fertilizer is introduced into said polymers, said method being characterized by
- determining the C/N ratio of the part of the soil to be conditioned;
- verifying if said ratio lies in a predetermined range;
- adding at least one organic fertilizer to said mixture if said ratio is not within said predetermined range.

Thus there is obtained a correct supply of organic fertilizer to the soil to be conditioned.

A fourth preferred embodiment of a method according to the invention is characterized in that at least one substance for stimulating the growth of plants to be cultivated on said soil is added to said mixture. This will provide a better growth to the plants which grow in said conditioned soil and thus a better yield.

Other details and particularities of the invention will become clear from the description, given hereunder by way of a non limiting example of a particular embodiment of a method according to the invention. The figures illustrate some aspects of the invention.

Figure 1 illustrates the C/N ratio as a function of the relative dry material yield.

Figures 2 to 11 illustrate schematically the synergism of the soil conditioning mixture according to the invention when introduced into the soil.

In order to improve the water capacity of a soil which serves in particular for the purpose of agriculture, horticulture or forestry, one can use water absorbing polymers. The soil can either be formed by any type of natural particles such as sand or clay, or can be formed by an artificial substrate such as for example glass wool. Those polymers have the particularity that they are able to absorb several times their own weight in water. They have further the property of buffering the absorbed water and releasing it slowly. Therefor such polymers are particularly suitable for example for domestical plants or for the purpose of agriculture, horticulture or forestry and in particular in dry regions of the world or in regions where rainy periods alternate with longer periods without rain. During such a period without rain or in a dry soil the polymers can supply their stored water to the plants, thus providing the necessary amount of water to the plants. The binding forces retaining the water into the polymers are somewhat inferior to the suction force applied by the roots of the plants, so that these are able to suck the water stored in the polymers.

The total amount of polymers per unit of volume to be supplied to a part of a soil to be conditioned is mainly determined by the water and/or air capacity of that soil. A sandy soil will require a larger amount of polymer than a clayish one because the more the soil is sandy the larger the water storage capacity of the used polymer has to be. The storage capacity of the polymers is determined on the one hand by the total amount of polymers used per unit of volume of the soil and on the other hand by the properties of the used polymers. Some polymers can absorb water, for example up to 50 times their own weight while others are able to absorb water up to 1500 times their own weight. In order to determine the total amount of polymers in the soil conditioning mixture to be formed the water and/or air capacity of the part of the soil to be conditioned has to be determined.

The amount of water in the soil can be measured in several ways. Experienced people can approximate moisture content rather closely by rubbing some soil from the root zone between the fingers, thereby determining the moisture of the soil.

Moisture content can be determined gravimetrically by drying a soil sample in an oven. One can state soil moisture in expressing the water tension. So free water is held with a very low tension, capillary water is bound more tightly and hygroscopic water is bound very tightly. In this last case the tension to remove the water is very high. The water tension can be measured with an apparatus called tensiometer or with sorption blocks. It can be expressed in different units such as for example bars, kilopasquals and pF ($\log_{10}h$, where h is the tension measured in centimeters of water). Water tension decreases continuously from O bars in the soil's wettest condition to about - 10.000 bars in its dryest condition. When a soil dries out the force required to extract water increases. The critical factor for plants is not the absolute amount of water in the soil but the force which they have to apply in order to extract it. If a higher extraction force than the one which can be developped by the plant is necessary, the plant will not be able to extract the water. The water tension which is applied by plants can be situated in between -0.33 bars (binding force pF = -0.48 or field capacity) and -15 bars (pF = 4.2 or permanent wilting point).

The actual water amount in soils varies with the soil texture. So some sandy soils can run out of water before -15 bars are reached. Given a certain soil texture the water tension can be influenced by introduction of a certain amount of water absorbing polymers in order to lower the pF until conditions are created which are more suitable for water uptake by plants.

One can easily determine the optimal amount of polymers to be added to a soil to be conditioned in measuring the pF values for different mixtures of soil and polymers, in which the polymer content gradually increases.

The air capacity of the part of the soil to be conditioned can be measured by the well known volume measurements techniques.

The water and/or air capacity of the part of the soil to be conditioned provides a first indicator which serves to determine the total amount of polymer necessary to form the mixture of soil conditioning means. For a given absorption capacity of polymers to be used, and taken into account the first indicator, the amount of polymer per unit of volume can now be determined. Suppose that the soil to be conditioned has a water tension of -10 bars and that the polymers have an absorption capacity of 500 times their own weight. For one $m^3$ of soil to be conditioned there will than for example be 5 kg of polymers.

Among the different types of polymers two categories can be clearly distinghuised i.e. a first category comprising the biologically decomposable polymers and a second category comprising the biologically non-decomposable ones. The biologically decomposable polymers are for example polymers manufactured on the basis of cellulose, starch or other organic materials. The biologically non-decomposable polymers are for example polymers manufactured on the basis of acrylic acid, acrylic amide or of a mixture of both substances. The dutch patent application n° 77 09 289 mentions different examples of polymers.

A key item of the present invention is formed by the insight that the biologically decomposable polymers are decomposed when they are aggressed by a living organism. This signifies that they contain organic materials which become part of a microbiological cycles and which thus serve to improve the quality of the soil in which they are introduced. Thus the polymers of the first category not only serve as a water buffer but also as a supply of organic materials to the soil and thus to the plants.

Once the total amount of polymers per unit of volume has been determined the parts of biologically decomposable and biologically non-decomposable polymers will now be determined. In order to determine the part of biologically decomposable polymers within the total amount of polymers per unit of volume there is determined a second indicator indicating the amount of organic material per unit of volume of said part of the soil to be conditioned. The second indicator is for example determined by incinerating a sample of the soil to be conditioned. Therefore that sample is exposed to a temperature of 400°C during three to four hours. After that time all the organic material present in the sample will have been burned so that only inorganic material (mineral ash) will be left. The amount of organic material present in the sample can than be obtained from the difference between the weigth of the sample and the weigth of the inorganic material left. In a preferred embodiment of a method according to the invention, the second indicator is set equal to the fraction, expressed in %, formed by said difference. It will however be clear that there are alternative ways for determining the second indicator.

That second indicator shows how rich (or how poor) the soil is in organic material and thus indicates how much organic material there has to be introduced into the soil in order to obtain a minimum amount of organic material in said soil, and allow a normal plant growth. As already set out hereabove at least a part of the organic material in the soil conditioning mixture can be provided by selecting polymers of the first category, i.e. biologically decomposable polymers. The second indicator thus provides an indication in order to determine a respective part of biologically decomposable polymers within the total amount of polymers. The richer the soil is in organic material, the lesser shall be the part of biologically decomposable polymers.

Suppose that a total amount of 5 kg polymers per $m^3$ of soil to be conditioned is necessary. Suppose also that the second indicator indicates that 10 % of that soil is formed by organic materials. In that case the respective part of the biologically decomposable polymers within the total amount of 5 kg is situated at 20 % or 1 kg. If the organic matter formes only 1 % of the soil to be conditioned the respective part of the biologically decomposable polymers has to be enlarged to 30 % or 1.5 Kg. Soils richer in organic matter with a low C/N-ratio need less biologically decomposable polymers and vice versa.

The second indicator does not only serve to determine a respective part of biologically decomposable polymers, but can also be used for determining, in combination with the first parameter and with the absorption capacity of the polymers to be used, the total amount of polymers to be introduced into the mixture to be formed. This is in particular the case when the mixture comprises as well biologically decomposable and biologically non-decomposable polymers. The biologically decomposable ones can have an other absorption capacity than the biologically non-decomposable ones. Thus once the respective part of biologically decomposable polymers has been determined by using the second indicator, it is necessary to take into account the absorption capacity of the biologically decomposable polymers in order to determine the required total amount of polymers.

By introducing an appropriate amount of polymers, such as determined by the method according to the invention, and in particular by introducing a respective part of biologically decomposable polymers, a rapid improvement of plant growth is obtained. It has indeed been established that by introducing a biologically decomposable polymer into the soil to be conditioned, that a biologically decomposable polymer quickly decomposes and thus forms a nutrition source for bacteria and fungi. In particular Nitrobacteriales and the Actinomycetales are attracted by these substances, such as for example starch or cellulose, resulting from the decomposition of the polymers. Since those substances are available, soon after the moment at which the polymers are introduced into the soil, bacteria and fungi can directly consume those substances.

The availability of a nutrition source for bacteria and fungi will stimulate the microbiological activity in the soil and start or restart biological cycles necessary to improve plant growth. The bacteria and fungi will on their turn facilitate nitrification and other processes. The thus produced substances are on their turn a nutrition source for the plants which will have an improved growth under those conditions. The biological cycles initiated or improved by the introduction of biologically decomposable polymers will increase the biomass in the soil and improve its chemical texture and composition.

Normally the biologically decomposable polymers, and in particular those on the basis of starch or cellulose are considered as carbon supply sources which would tend to alter the C/N ratio and thus the chemical equilibrium in the soil. However, due to their gradual decomposition they form such an appropriate nutrition source for bacteria and fungi that the nitrification and other processes will gradually reestablish the C/N ratio at an appropriate level. It has been experimentally established that the biologically decomposable polymers in particular attract bacteria of the Nitrobacteriales and the Actinomycetales group. These will than have a dominant position with respect to other organisms. Since these bacteria are particularly suitable for producing nitrogen an eventual increase of carbon will quickly be compensated by a supply of nitrogen.

It is important that the respective part of biologically decomposable polymers is correctly determined. Experiments have proven that if more than 40 % of the total amount of polymers is constituted by biologically decomposable polymers, there is a large probability that the C/N ratio will be perturbated. On the other hand if there is less than 10 % of biologically decomposable polymers the expected effect will not be obtained.

The part of organic material within the soil conditioning mixture can be completely constituted by biologically decomposable polymers. However it is also possible to introduce, beside the biologically decomposable polymers, other organic materials. Those organic materials can for example be formed by an organic fertilizer introduced into the mixture.

A lot of dry or degraded soils show a clear deficiency of organic material. This deficiency causes the biological activity in such soil to be substantially lower than normal. There is a direct relation between the intensity of the microbiological activity in the soil and the plant growth. Stimulation of that microbiological activity means stimulation of the plant growth. Therefor it is necessary to introduce organic materials in the soil conditioning mixture.

Those organic materials are formed either by organic materials of vegetable origin or of animal origin or of a mixture of both. Organic materials of animal origin are for example dried cow dung or chicken dung. Organic materials of vegetable origin are for example moulded dry plant parts, like leaves or small branches, which form an excellent nutrition source for all kinds of bacteria and fungi. The presence of these organisms in the neighbourhood of the roots is essential to improve the development of the roots.

In order to determine the nature of the organic fertilizer to be added to the soil conditioning mixture, the C/N ratio of the part of the soil to be conditioned is determined, for example by a chemical analysis of the soil. When micro-organisms are breaking down to organic matter, they consume nitrogen to produce microbial proteins and they use energy in consuming carbohydrates to run their own metabolism.

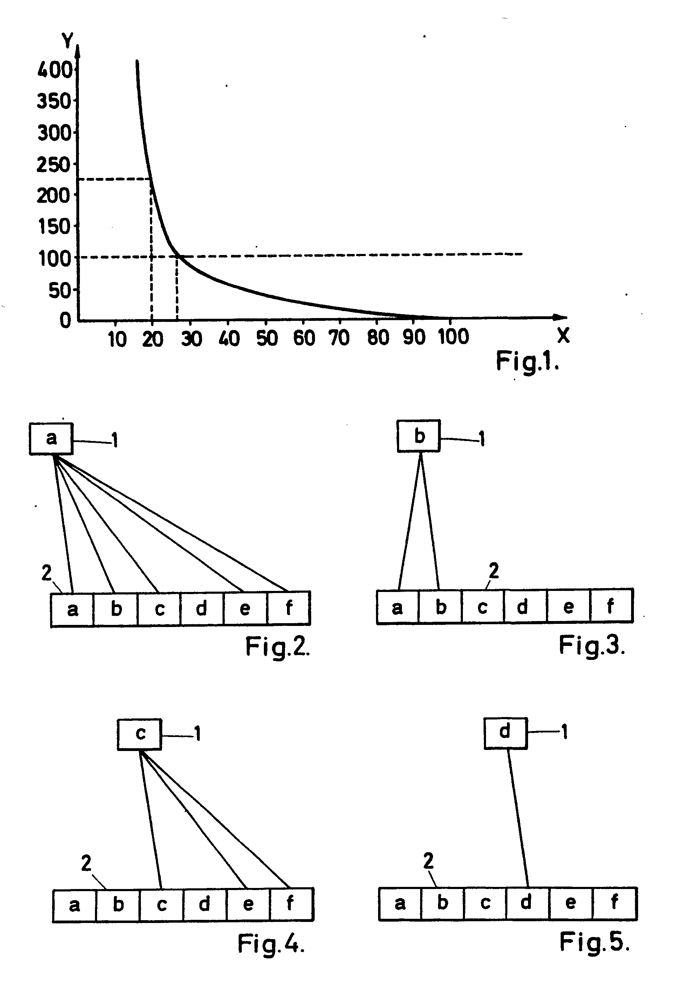

It has been stated that an optimal C/N ratio is situated approximately at 25. If C/N is higher than 25 (C/N > 25) immobilisation will start because nitrogen is a limiting factor for optimal growth. If C/N is lower than 25 (C/N < 25) mineralisation occurs. Figure 1 shows the relation between the C/N ratio (x-axis) and the relative dry material yield in % (y-axis). A 100 % yield is obtained with a C/N ratio of substantially 25. For this C/N ratio the absolute values of the C- and N-fractions are not so important, but their nature will determine the speed of mineralisation.

Ones the nature of an organic fertilizer is known its mineralisation speed can be measured and in function thereof the amount of fertilizer to be added to the soil to be conditioned can easily be determined.

When the C/N ratio is higher than 25, this signifies that there is not enough nitrogen (N) in the soil and thus that a fertilizer which is rich of nitrogen has to be added to the mixture to be formed in order to compensate for a nitrogen deficiency. On the other hand when the C/N ratio is lower than 25, this signifies that there is not enough carbon (C) in the soil or that there is to much nitrogen, thus requiring the addition of a nitrogen-poor and carbon rich fertilizer to the mixture to be formed.

The biologically decomposable polymers and the organic fertilizer together form the organic material introduced into the soil conditioning mixture. It is also possible to modify the amounts of decomposable polymers and organic fertilizer for example by adding more fertilizer and reducing the amount of biologically decomposable polymers. However if the latter is realized it is necessary to keep in mind that at least the necessary amount of organic material either in the form of biologically decomposable polymers or of an organic fertilizer has to be introduced into the soil conditioning means. Otherwise there will not be a reestablishment of the necessary equilibrium in the soil, in order to allow a normal growth of plants.

For example one can add a certain amount of ureumformaldehyde to the soil conditioning mixture, knowing that this substance is easily decomposable and can be used as a supplementary nitrogen source.

A further parameter determining the composition of the soil conditioning mixture according to the invention is the period of time during which the mixture has to remain active. Several factors determine that period of time. One of those is for example the accessibility of the part of the soil to be conditioned. If that soil is situated at a location which is difficultly accessible there is advantageously made use of polymers which remain operational for several years. In the latter case use is advantageously made of biologically non-decomposable polymers. A deficiency of organic material in such a soil is than preferrably compensated by adding more organic fertilizer instead of using a large amount of biologically decomposable polymers.

Another important factor to take into account for determining the time during which the polymer has to remain active is the climatic environment to which the soil is submitted. For example if longer periods without any rain occur, than more polymers having a large absorption capacity have to be used, in order to form a larger water buffer.

Those parameters are taken into account in order to determine a third indicator indicating a minimum period of time during which said soil conditioning mixture has to remain active. That third indicator is than used for selecting among the known polymers one or more types of polymers which are suitable to remain operational during a period of time which is at least equal to the period of time indicated by said third indicator. For example if the third indicator indicates that the soil conditioning mixture has to remain active during five years, a polymer with a lifetime of at least five years is for example chosen.

Due to the fact that most of the soils to be conditioned are poor in mineral nutrients it is necessary to add inorganic substances to the soil conditioning mixture. Those inorganic substances are generally formed by macro and/or microelements used in fertilizer such as for example Nitrogen (N), Phosphorus (P) and Potassium (K) which are macroelements and for example magnesium and manganese which are microelements. The amount of each of those inorganic elements required for a normal plant growth is related to the kind of plant and sometimes by the developmental stages in the life cycle of the plant. So it is possible that at the early stages of its life cycle a plant needs more of one element than at latter stage.

By determining the composition of the soil conditioning mixture and in particular by determining the amount of inorganic elements it is necessary to take into account the chemical composition of the soil to be conditioned. Introducing to much inorganic fertilizers into the soil to be conditioned could have detrimental physiological consequences to the plants to be cultivated. Therefor it is important to determine accurately for at least one, but preferably for more macro and/or microelements, its (their) respective amount into the soil to be conditioned. Said amount(s) is (are) determined by well known methods such as for example gas chromatography or spectro photometry. So there can for example be determined how much N, P or K elements there are present in the soil to be conditioned.

Once said amount for one or more chemical elements is determined, there is verified whether for each of the considered elements said amount is less than a nominal amount necessary for allowing a normal plant growth. If the determined amount is less than said nominal amount it is necessary to introduce into the soil conditioning mixture a further amount of inorganic fertilizers in order to compensate for a deficiency with respect to said nominal amount. Preferably there is chosen a fertilizer which is rich of the deficient element or elements. For example when it has been established that the soil is poor of potassium, a fertilizer which is rich of potassium nitrate (containing 38 % potassium) is preferably chosen. However it has to be observed that the amount of fertilizer introduced into the mixture has to be limited. The introduced fertilizer leads to a solution of mineral salts. These salts will limit the quantity of water absorbed by the polymers. Thus when to much inorganic fertilizer is introduced into the soil, less water will be absorbed by the polymers, which will lead to an unsufficient water supply to the plants.

Determination of the chemical composition of the soil is of course only required if the chemical composition is not already known. When the soil to be conditioned is of a well known type, from which it is known that it is poor in inorganic material there is no need to determine the chemical composition. In the latter case a predetermined further amount of inorganic material can be added without determination beforehand.

The necessary inorganic chemical substances have to be supplied during the whole lifetime or at least during a substantial part of the lifetime of the plant. However the necessary amount can be function of the growth of the plant. And, in certain cases, for example when the soil is very poor of inorganic substances, it could be necessary to supply at once a considerable amount of inorganic fertilizer in order to provide a fast reequilibration of the soil. The soil can be so poor that there is an urgent need for a fast supply of a large amount of soluble inorganic substances (fast release fertilizer) as a starter component for plant growth. Further it can also be possible that, for example during a period of heavy rain, a lot of the introduced inorganic substances will be washed out, requiring a larger quantity of inorganic fertilizer. Thus under certain circumstances there is preferably added an additional amount of inorganic fertilizer. For that purpose the climatic environment is once again taken into account and if a period of heavy rain occurs or will occur more inorganic fertilizer is introduced into the soil conditioning mixture. Further the plant species to be cultivated is also taken into account in determining how much and what kind of inorganic fertilizer there has to be introduced into the mixture.

For example all plant species cultivated for their leaves require more nitrogen in the fertilizer in order to produce a higher amount of biomass. Other plant species of which the fruits are eaten, like tomatoes for instance, need lesser nitrogen during the period of fruit formation.

Beside the fast release fertilisers introduced into the soil conditioning mixture to be formed and allowing a fast supply of inorganic chemical elements, there is also introduced a slow release fertilizer allowing a supply of inorganic chemical elements over a longer period of time. The slow release fertiliser is formed by embed ding the inorganic chemical substances into a porous layer. That porous layer is for example formed by a resin and provides a uniform supply of fertiliser over a longer period of time, thus avoiding to "over-fertilise" the plants or to have a too high demineralisation of the soil. The mixture of the water stored in the polymers and the slow release fertilizer provides, even in a dry period, an appropriate supply of water and fertilizer to the plant, which enables a favourable development of the plant.

The combination of slow and fast release fertilizer provides to the growing plant all necessary elements for a good and continuous growth. In order not to influence in a negative way the swelling force of the used polymers the amount of fast release fertilizer is preferably kept low, unless there is a great need thereof. The total amount of inorganic fertilizer in the soil conditioning mixture varies between 5 and 25 %.

Beside the embedding in a porous layer of the inorganic fertilizer it is of course also possible to embed the organic fertilizer into a porous layer.

The size of the particles forming the water absorbing polymers is important in the choice of the polymers to be used in the soil conditioning mixture according to the invention. Some polymers form a powdry product while others are granular. According to the size of the particles, the polymers are divided into classes. The choice of one of those classes of polymers is determined by the granulometry of the soil to be conditioned. Therefor it is important to determine the granulometry of the soil to be conditioned and thus to determine whether it is a soil which consists essentially of sand or of clay or to determine all gradients over loam. For example when the soil consist essentially of sand, polymers in powdry form are preferably chosen. On the other hand when the soil is more clayish it is preferable to use granular polymers, which improve the soil aeration. Indeed a clayish soil is generally compact which does not facilitate a good aeration of the soil. The introduction of granular polymers creates gel blocks of different sizes in the soil improving the aeration thereof. On the other hand when a large amount of granular polymers should be introduced into a sandy soil this would cause that soil to swell. Therefor powdry polymers are more suitable for sandy soils, in which they play a compacting role.

The different types of soil are classified according to their granulometry. Once the granulometry of the soil is determined there can be established to which granulometric class the soil belongs. Further to each type of water absorbing polymer there is assigned a particular granulometric range. Once its has been determined to which granulometric range the soil belongs, the class of polymers assigned to that range is than selected and supplied to the soil to be conditioned.

In order to improve or accelerate the growth of the roots, so that in dry regions of the world the roots can quickly grow to depths where there is more water present, use is made of substances which stimulate the root growth. However those substances which stimulate the root growth can not be supplied in an uncontrolled manner to the plants. For example an excess of grow stimulators could cause tumors to the plants. An accurate choice of the substances and of their amount is thus required.

In the soil conditioning mixture according to the invention use is made of substances which indirectly act as precursors of growth stimulators. Such substances are for example formed by sacharrides, vitamins, amino acids and proteins or a mixture thereof. During the normal development of the plant there is a certain uptake of these precursors in order to form the necessary substances that stimulate its root growth. When those precursors are present in the soil conditioning mixture, the plant can make use of them. The plant will than control its own needs in order to produce its own hormones. Further due to the presence of various precursors, the plant can make its own choice, selecting those which are most appropriate.

The root growth and consequently the plant growth can further be improved by adding to the mixture to be formed bacteria, fungi or blue algae. Those elements enrich the microbiological fauna and flora in the soil and thus improve the biological live of the roots, enabling a better growth of the plant. The blue algae are able to fix a part of the nitrogen gas in order to form proteins, which afterwards can be mineralized and used by the roots of the plants. Further nitrogen fixing bacteria are also appropriate since they form a nitrogen supply to the roots. Rhizobium or Clostridium bacteria are preferably used. Use is preferably made of ecto- or endoparasitic fungi, like those that form mycorhizae.

The synergy of the different elements composing the mixture according to the invention makes that mixture particularly suitable for improving plant growth. When in its basic form the mixture is only composed of biologically degradable and biologically non-degradable polymers, the plant growth is improved due to the fact that as well water (stored in the polymers) as organic fertilizer (decomposition of the biologically degradable polymer) is supplied to the plant. This enables the plant to grow in an organically poor and dry soil, in which it would not be able to grow without the soil conditioning means according to the invention.

The addition of further elements such as organic or inorganic fertilizers, growth stimulators, bacteria, blue algae or fungi, improves the growth of the plant, either by providing the necessary nutrition to the plant or by creating a biologically favourable environment which stimulates the development of the plant. The gist of the invention thus consists in an accurate analysis of the soil, which analysis provides information enabling to supply to that soil the missing elements which are necessary to enable plant growth. The polymers are the key item of the mixture according to the invention since they not only serve as a water buffer, but also as means for storing and supplying the missing elements, such as determined upon said soil analysis. They even can serve as a nutrient for bacteria, as already mentioned. Since the missing elements are now carried by the polymers the plant will find in the polymers and the soil all the elements necessary for its growth. The analysis of the soil enables to correctly set out which are the missing elements, so that the soil on which the plant will be planted is adequately conditioned without having a negative influence on the development of the plant.

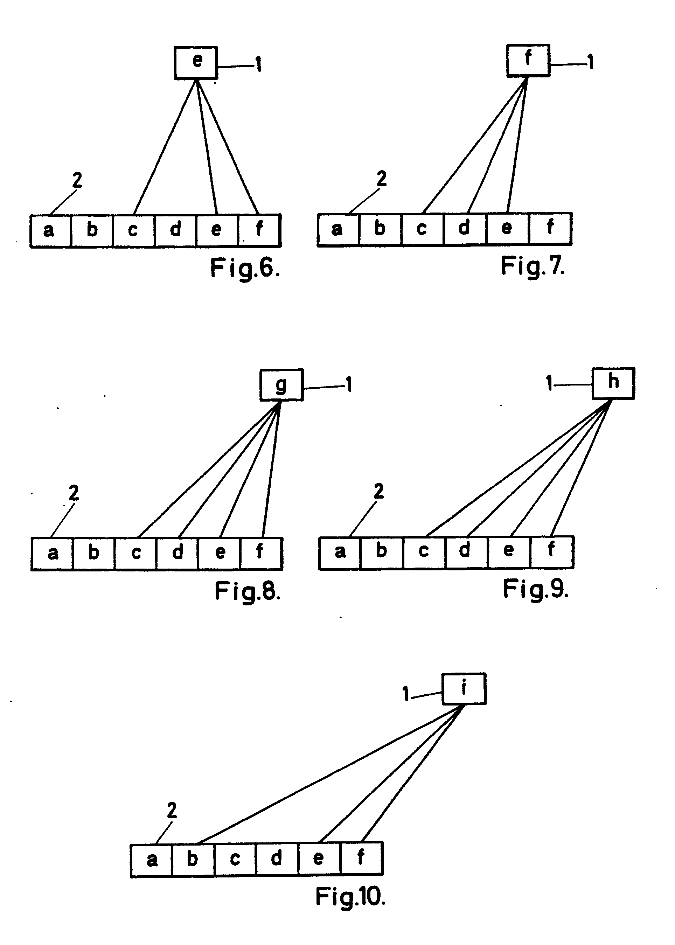

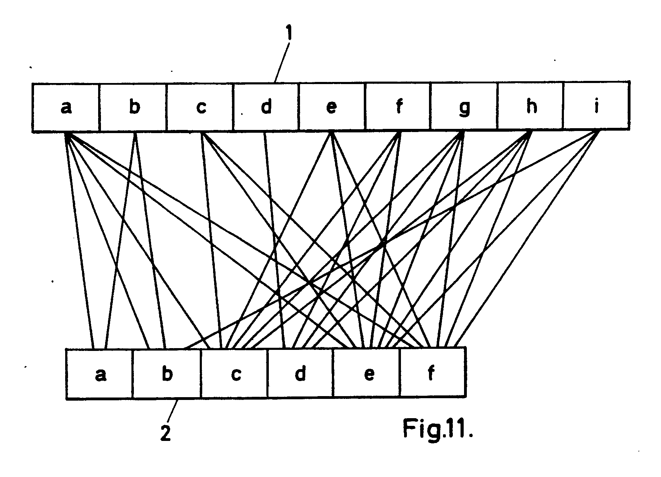

The synergy obtained by the mixture according to the invention is schematically illustrated in the figures 2 to 11. The block 1 of figure 11 illustrates the different components of which a mixture according to the invention can be constituted. Block 2 illustrates the necessary components which have to be present in the soil. The mixture according to the invention comprises, in one of its most complete embodiments, biologically decomposable 1a (fig. 2) and biologically non-decomposable 1b (fig. 3) polymers, at least one organic fertilizer 1c (fig. 4), at least one inorganic fertilizer 1d (fig. 5), growth stimulators 1e (fig. 6), bacteria 1f (fig. 7), fungi 1g (fig. 8), blue algae 1h (fig. 9) and water 1i (fig. 10) absorbed by the polymers. The polymers act on the structure of the soil 2a as is illustrated in figure 2. Due the absorbed water they also act on the water capacity 2b of the soil. The polymers of the biologically decomposable type further act on the organic composition 2c of the soil and improve the microbiological activity in the soil. They further have a positive influence on the pedoflora 2e and pedofauna 2f since they form a support and nutrients for fungi and bactaria.

The polymers of the biological non-decomposable type acts on the structure 2a and the water and/or air capacity 2b of the soil as illustrated in figure 3.

The organic or inorganic fertilizers introduced in the mixture supply organic respectively inorganic material 2c resp. 2d to the soil. The plant growth already started or improved by the presence of water 1i and the positive influence of the biologically decomposable polymers can now in an advantageous manner make use of the organic and inorganic fertilizer introduced by the mixture. If the fertilizer would have been introduced into the soil without the polymers, and in particular the biologically decomposable polymers, there would not have been that "initial push" to the biological activity in the soil enabling the plant to start growing. Once the plant has received that initial push it can fully make use of the fertilizers present in the soil.

The growth stimulators 1e act on the pedofauna 2e and pedoflora 2f in the soil as illustrated in figure 6. By stimulating the growth of the roots, more root biomass is present in the soil, which on its turn forms a nutrition source for bacteria and fungi enabling a better development of the latter. The microbiological activity developped by the bacteria and fungi will in return profit to the plants. The growth stimulators also acts on the inorganic material in the soil since they can comprise inorganic material.

When the mixture also contains bacteria (1f), fungi 1g or blue algae 2h those will of course influence the pedofauna 2e and pedoflora 2f by either introducing microbiological activity in the soil when there was practically no activity present or by improving or stimulate an already present but rather weak biological activity. The desintegration of dead bacteria, blue algae or fungi will on its turn introduce organic and inorganic material in the soil, which is then enriched for the plants.

The mixture according to the invention is thus particularly dedicated for improving plant growth under different conditions or on different substrates since all the components of the mixture leads directly or indirectly to an improved plant growth.

## Claims

1. A method for forming a mixture of soil conditioning means for improving plant growth, said mixture comprising at least a water absorbing polymer, and wherein a first indicator indicating the water and/or air capacity of the soil part to be conditioned is determined, characterized in that said method comprises the following steps :
- determining a second indicator indicating the amount of organic material per unit of volume present in said soil part;
- determining upon said first indicator and taking into account the absorption capacity of the polymers to be used, a minimum amount of polymer per unit of volume of said soil part to be introduced into said mixture;
- determining upon said second indicator a respective part of biologically decomposable polymers within said amount of polymers;
- supplying per unit of volume of the part of the soil to be conditioned at least said amount of polymers and which comprises at least said respective part of biologically decomposable polymers.

2. A method as claimed in claim 1, characterized in that said amount of polymers is further determined by taking into account said second indicator.

3. A method as claimed in claim 1 or 2, characterized in that said method comprises the further steps of :
- determining a third indicator indicating a minimum period of time during which said polymers have to remain operational;
- selecting polymers which remain operational during a period of time which is at least equal to the period of time indicated by said third indicator.

4. A method as claimed in one of the claims 1, 2 or 3 wherein the polymers are divided into classes according to the size of the particles of which they are formed, characterized by
- assigning to each class of polymers a particular granulometric range;
- determining the granulometry of said part of said soil to be condi tioned;
- determining to which of said granulometric ranges said determined granulometry belongs;
- selecting the class of polymer assigned to said determined granulometric range.
- supplying polymers of said selected class for said amount of polymers.

5. A method as claimed in anyone of the claims 1 to 4, characterized in that a first amount of at least one of the chemical macro and/or micro-elements per unit of volume of the part of the soil to be conditioned is determined and that for each of said determined first amount there is verified whether said first amount is less than a predetermined nominal amount and that if said first amount for each of the considered elements is less than said predetermined nominal amount for the considered element, there is introduced into said mixture a second amount of fertilizer comprising at least the considered chemical element in order to compensate for a deficiency in said considered chemical element.

6. A method as claimed in anyone of the claims 1 to 5 wherein a fertilizer is introduced into said polymers, characterized in that the particles of said fertilizer are embedded into a porous layer.

7. A method as claimed in claim 5 or 6, characterized in that the climatic environment to which the soil to be conditioned is submitted is determined, and that when said climatic environment indicates a period of rain in a relatively near future, a predetermined amount of fast release fertilizer is added.

8. A method as claimed in claim 7, characterized in that said amount and/or the type of fast release fertilizer is determined upon the kind of plant to be cultivated on said soil.

9. A method as claimed in one of the claim 1 to 8 wherein an organic fertilizer is introduced into said polymers, characterized by :
- determining the C/N ratio of the part of the soil to be conditioned;
- verifying if said ratio lies in a predetermined range;
- adding an organic fertilizer to said mixture, if said ratio is not within said predetermined range.

10. A method as claimed in claim 9, characterized in that there is verified if said ratio is approximately 25, and that if said ratio is higher then 25 a nitrogen rich fertilizer is added to the mixture and if said ratio is lower than 25 a carbon rich fertilizer is added.

11. A method as claimed in claim 9 or 10, characterized in that an organic fertilizer which is composed of an organic material of vegetable or animal origin, or of a combination of both is added to said mixture.

12. A method as claimed in one of the claims 1 to 11, characterized in that at least one substance for stimulating the growth of plants to be cultivated on said soil is added to said polymers.

13. A method as claimed in claim 12, characterized in that one of the substances or a mixture of the substances formed by sacharrids, vitamins, amino acids and proteins is added as a growth stimulator.

14. A method as claimed in anyone of the claims 1 to 13, characterized in that bacteria are added to the mixture.

15. A method as claimed in anyone of the claims 1 to 14, characterized in that blue algae are added to the mixture.

16. A method as claimed in anyone of the claims 1 to 15, characterized in that fungi are added to the mixture.

17. Soil conditioning mixture formed by a method as claimed in any of the preceding claims.

18. Soil conditioning mixture as claimed in claim 17 comprising biologically non-decomposable polymers, characterized in that said mixture also comprises biologically decomposable polymers.

19. Soil conditioning mixture as claimed in claim 18, characterized in that it comprises a substance for stimulating the growth of the plant.

20. Soil conditioning mixture as claimed in claim 18 or 19, characterized in that it comprises bacteria and/or fungi.

21. Soil conditioning mixture as claimed in claim 18, 19 or 20, characterized in that it comprises blue algae.

Fig.1.

Fig.2.

Fig.3.

Fig.4.

Fig.5.

Fig.6.

Fig.7.

Fig.8.

Fig.9.

Fig.10.

Fig.11.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 094 513  (AKZO GmbH)<br>* Claims 1,9;  summary *<br>--- | 17-19 | C 05 G    3/04<br>C 09 K   17/00<br>G 01 N   33/24 |
| X | FR-A-2 442 810  (LABORATOIRE ALGOCHIMIE)<br>* Page 1, lines 16-26; page 2, lines 6-9; page 2, line 30 - page 3, line 4; page 3, line 38 - page 4, line 3; page 4, lines 16-20; claims * | 17-19 | |
| Y<br>A | | 20-21<br>1,5-8,<br>11-13 | |
| A | EP-A-0 255 752  (CHISSO CORP.)<br>* Page 7, lines 44-60; page 8, lines 4-10 *<br>--- | 3,5,7,8<br>,17-19 | |
| X | GB-A-1 011 910  (PROPLASTO AG)<br>* Page 1, line 18 - page 2, line 96; claims * | 17-19 | |
| Y | ---  | 20-21 | TECHNICAL FIELDS SEARCHED (Int. Cl.5) |
| A | US-A-4 762 545  (N.N. YOUSSEF et al.)<br>* Column 2, lines 40-45; column 3, line 40 - column 4, line 11; column 4, lines 21-51; column 5, lines 23-33; column 12, lines 3-68 *<br>--- | 1,5,17 | C 05 G<br>C 09 K<br>G 01 N |
| A | DE-C- 840 612  (A. SOMMER)<br>* Claims *<br>--- | 1,5 | |
| A | FR-A- 609 237  (M.A. VINCENT)<br>* Page 1, lines 26-30; abstract *<br>---                               -/- | 1,5 | |

The present search report has been drawn up for all claims

| Place of search | Date of completion of the search | Examiner |
|---|---|---|
| THE HAGUE | 23-11-1989 | SCHUT,R.J. |

EPO FORM 1503 03.82 (P0401)

European Patent - Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 213 962 (J.F. BLANCHON)<br>* Page 1, lines 1-31; page 3, lines 13-20; page 5, lines 10-15; claims * | 1,17-19 | |
| Y | EP-A-0 253 673 (AGRICULTURAL GENETICS CO. LTD)<br>* Claims; page 1, lines 1-9 * | 20,21 | |
| | | | TECHNICAL FIELDS SEARCHED (Int. Cl.5) |

The present search report has been drawn up for all claims

| Place of search | Date of completion of the search | Examiner |
|---|---|---|
| THE HAGUE | 23-11-1989 | SCHUT,R.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)